# EUROPÄISCHE PATENTSCHRIFT

(11) **EP 4 051 420 B1**
(45) Veröffentlichungstag und Bekanntmachung des Hinweises auf die Patenterteilung: **05.11.2025**
(21) Anmeldenummer: 20797468.4
(22) Anmeldetag: 26.10.2020
(51) Int. Cl.: B01D 63/02, B01D 63/04, B01D 65/02, B01D 65/08, C02F 3/12, C02F 3/20

(54) **VERFAHREN ZUR FILTRATION EINER FLÜSSIGKEIT UND FILTEREINRICHTUNG**
METHOD FOR FILTERING A LIQUID, AND FILTER DEVICE
PROCÉDÉ DE FILTRATION D'UN LIQUIDE ET DISPOSITIF DE FILTRAGE

(30) Priorität: 28.10.2019 DE 102019129074
(43) Veröffentlichungstag der Anmeldung: 07.09.2022
(73) Patentinhaber: membion GmbH, 52159 Roetgen (DE)
(72) Erfinder: VOSSENKAUL, Klaus, 52074 Aachen (DE); VOLMERING, Dirk, 52070 Aachen (DE)
(74) Vertreter: Bauer, Dirk
(86) Internationale Anmeldenummer: PCT/EP2020/080074
(87) Internationale Veröffentlichungsnummer: WO 2021/083846

(56) Entgegenhaltungen:
- WO-A1-2008/153818
- WO-A1-2016/064466
- CN-A- 104 084 049
- US-A1- 2009 194 477
- US-A1- 2015 265 973

## Beschreibung

Die Erfindung betrifft zunächst ein Verfahren zur Filtration einer Flüssigkeit in einem in die Flüssigkeit getauchten Membranfilter mit Membranen, wobei zum Reinigen der Membranen mittels einer Begasungseinrichtung Gas in aufeinanderfolgenden Pulsen unten in den Membranfilter eingeleitet wird, indem jeweils zunächst ein unterhalb einer Oberfläche der Flüssigkeit angeordnetes und nach unten durch einen Pegel der Flüssigkeit begrenztes Gasvolumen mit dem Gas aufgefüllt wird, wobei das Gas zugleich die Flüssigkeit von oben nach unten aus einem Gasheberkanal verdrängt, bis der Pegel einen Einlassquerschnitt eines Gas-Ausströmkanals unterschreitet, dann das Gas aus dem Gasvolumen in Folge nach unten durch den Gasheberkanal, einen sich an diesen unten anschließenden Umlenkungsbereich, nach oben durch den Einlassquerschnitt und den sich an diesen oben anschließenden Gas-Ausströmkanal zu der Oberfläche strömt.

Die Erfindung betrifft weiterhin eine Filtereinrichtung, die einen Membranfilter zur Filtration einer Flüssigkeit mit Membranen und eine unterhalb der Membranen angeordnete Begasungseinrichtung aufweist mit einem nach unten offenen Gas-Sammelraum, der durch eine obere Wandung und eine seitliche Wandung begrenzt wird, einem Gaseinlass zum Einlassen eines Gases in den Gas-Sammelraum, einem Gasheberkanal zum Leerhebern des Gas-Sammelraumes, der oben einen Gashebereinlass im Gas-Sammelraum aufweist, einem Umlenkungsbereich unten an dem Gasheberkanal, und einem Einlassquerschnitt oben an dem Umlenkungsbereich, an den oben ein Gas-Ausströmkanal anschließt.

Ein solches Verfahren und eine solche Begasungseinrichtung sind bekannt aus US 2015/0265973 A1, CN104084049 A und CN105854619 A.

Die bekannten Verfahren und die bekannten Begasungseinrichtungen sind konzipiert für den Einsatz zur Begasung von Membranfiltern, wie sie beispielsweise bei Membranbioreaktoren (MBR) anzutreffen sind. Die Begasungseinrichtung wird unterhalb der Membranfilter positioniert und mit einem im Wesentlichen konstanten Luft-Volumenstrom beaufschlagt, der dann pulsweise aus der Begasungseinrichtung ausströmt.

Um eine Verstopfung der Membranen durch abfiltrierte Stoffe zu verhindern, wird die Luft von unten in die Membranfilter eingetragen. Auf dem Weg zur Oberfläche der Flüssigkeit durchströmt das Gas die über der Begasungseinrichtung installierten Membranfilter. Die dadurch generierte Scherkraft der Zweiphasenströmung aus Luft und zu filtrierender Flüssigkeit spült die Membranen.

Beim pulsweisen Austreten der Flüssigkeit entstehen höhere Scherkräfte als bei kontinuierlicher Begasung und gleichzeitig wird eine Kanalbildung der Luft vermieden, d. h. die aufsteigenden Luftblasen müssen sich stets neu formieren und finden dabei immer wieder neue Wege durch den Membranfilter.

Man nennt eine solche Begasungseinrichtung, die konstant mit Luft beaufschlagt wird und diese dann pulsweise wieder auslässt, auch einen Geysir.

Durch den an den Einlassquerschnitt angeschlossenen Gasheberkanal wird das im Gas-Sammelraum angestaute Gasvolumen beim Ausströmen des Gases aus der Begasungseinrichtung über das Prinzip der kommunizierenden Röhren herausgesaugt, so dass sich der Gas-Sammelraum weitestgehend entleert.

Während der Entleerung des Gas-Sammelraums saugt der ausströmende Gas-Volumenstrom nach dem Mammutpumpenprinzip Flüssigkeit durch den Kompensationseinlass und transportiert diese mit durch den Ausströmkanal. Dies hat den Vorteil, dass der Gasvolumenstrom nach Entleerung des Gas-Sammelraums schneller zum Erliegen kommt und damit die Begasungseinrichtung mit höherer Gaszufuhr betrieben werden kann.

In den bekannten Verfahren und Filtereinrichtungen strömt die Luft aus dem Geysir (der Begasungseinrichtung) zunächst in einen seitlich offenen Bereich, so dass ein Großteil der von der Luft verdrängten Flüssigkeit aus dem Modul seitlich verdrängt wird und dadurch nicht zur Spülung der Membranen genutzt wird. Zudem entweicht je nach Größe des Luftpulses ein Teil der Luft unten seitlich aus dem Modul und steigt dann ungenutzt neben dem Membranfilter, d.h. ohne Spülwirkung für die Membranen auf.

Im Hintergrund der Erfindung beschreiben WO 2016/064466 A (Koch Membrane Systems), US 2009/0194477 A1 (Asahi Kasai), US 10,179,311 B2 (Sumitomo Electric), CN104519984B B (Samsung Cheil Industries), KR20190002717 A (Mitsubishi Chemical) und WO 2011/028341 A1 (Zenon Technology Partnership) Begasungseinrichtungen, die keinen Kompensationseinlass aufweisen und daher nur mit relativ geringer Gasvolumen-Zufuhr pulsierend betrieben werden können. Auch bei diesen Filtereinrichtungen strömt die Luft beim Austritt aus dem Geysir in einen seitlich offenen Bereich.

### Aufgabe

Es ist die Aufgabe der vorliegenden Erfindung, die Reinigungswirkung der eingebrachten Luft zu verbessern.

### Lösung

Ausgehend von dem bekannten Verfahren wird nach der Erfindung vorgeschlagen, dass ein Gehäuse die Membranen seitlich umgibt und oben direkt an die Begasungseinrichtung anschließt.

Das Verfahren und die Vorrichtung der Erfindung werden in den Ansprüchen 1 und 4 definiert.

Vorteil dieser Ausgestaltung des Membranfilters ist es, dass das in den Membranfilter eingetragene Gas diesen aufgrund des an die Begasungseinrichtung lückenlos anschließenden und dann seitlich die Membranen umgebenden Gehäuses nicht verlassen kann und somit effektiv zur Spülung der Membranen genutzt wird.

Vorteil ist dabei, dass auch die durch die Luft verdrängte Flüssigkeit nicht seitlich aus dem Membranfilter entweichen kann, wodurch die Beschleunigung der Flüssigkeitssäule verstärkt wird. Die sich aus dem eingetragenen Gas in dem Gehäuse bildende und dann zunächst zusammenhängend aufsteigende Blase beschleunigt die darüber befindliche Flüssigkeitssäule derart, dass sie gleichfalls mit hoher Geschwindigkeit an den Membranen vorbei strömt und durch die entstehenden Scherkräfte an diesen angelagerte Verunreinigungen abreißt. Die Reinigungswirkung der eingebrachten Luft wird durch beide Effekte um etwa eine Größenordnung verbessert und die für die Reinigung aufzuwendende Energie entsprechend vermindert.

Vorzugsweise strömt in einem erfindungsgemäßen Verfahren ein Sperrstrom der Flüssigkeit durch einen Kompensationseinlass unterhalb des Gashebereinlasses zu dem Einlassquerschnitt und wird von dem Gas solange mitgerissen, bis die Flüssigkeit den Umlenkungsbereich füllt und dadurch den Einlassquerschnitt für das Gas verschließt.

Bei dem erfindungsgemäßen Verfahren steigt der Pegel in der Begasungseinrichtung während der Entleerung des Gasvolumens wieder an, wobei das Gasvolumen durch von unten nachströmende Flüssigkeit verdrängt wird. Dabei bewirkt der Saugeffekt des in dem Ausströmkanal aufsteigenden Gases, dass ein Sperrstrom der Flüssigkeit durch den Kompensationseinlass angesaugt wird und zu dem Einlassquerschnitt strömt. Dieser Sperrstrom der Flüssigkeit wird so lange von dem Gas mitgerissen, bis die Flüssigkeit den Umlenkungsbereich füllt und somit den Einlassquerschnitt füllt und somit wie ein Ventil für das Gas verschließt.

Damit wird bei dem erfindungsgemäßen Verfahren sichergestellt, dass zum Zeitpunkt des weitgehend leergesaugten Gasvolumens auch bei hoher Gasvolumenstrom-Zufuhr die Ausströmung des Gases unterbrochen wird und das Gasvolumen wieder aufgefüllt werden kann. Damit wird das Pulsieren des Gases auch bei hoher Gasvolumenstrom-Zufuhr gesichert.

Vorzugsweise strömt in einem solchen erfindungsgemäßen Verfahren nachdem der Pegel den Einlassquerschnitt unterschritten hat, zunächst allein das Gas durch den Gas-Ausströmkanal, bis der Pegel den Kompensationseinlass übersteigt, und erst dann strömt der Sperrstrom durch den Kompensationseinlass zu dem Einlassquerschnitt. Der Geysir schleppt dann kurz vor der Entleerung auch bei größeren Luftströmen Flüssigkeit mit, so dass das Stoppen des Geysirs sichergestellt ist und eine Neubefüllung beginnen kann.

Das bedeutet, dass sich bei dem erfindungsgemäßen Verfahren zu Beginn der Gasströmung durch den Gas-Ausströmkanal der Kompensationseinlass in Gas-Kommunikation befindet, d.h. er befindet sich im mit Gas gefüllten Gas-Sammelraum. Dadurch wird gewährleistet, dass auch bei extrem geringen Gaszufuhr-Volumenströmen die Entleerung des Gasvolumens sicher startet, da kein Flüssigkeitsstrom den Gassaugeffekt und damit das Leerhebern des Gasvolumens behindert.

Der Geysir beginnt dann auch bei sehr kleinen Luftströmen, sich zu entleeren.

Dabei hat das erfindungsgemäße Verfahren den Vorteil, dass die weitgehend konstante Gasvolumenstrom-Zufuhr in einem weiten Bereich variiert werden kann und stabil pulsierend in den Membranfilter eingeleitet wird. Damit kann der pulsierende Gasvolumenstrom durch den Membranfilter über einen weiten Bereich der Filtrationsleistungs-Variation energiesparend an die jeweilige Filtrationsleistung angepasst werden.

Das heißt, in einem erfindungsgemäßen Verfahren kann der Membranfilter bei variabler Filtrationsleistung auch mit variabler Gasvolumenstrom-Zufuhr sicher pulsierend betrieben und dadurch eine effektive Spülung der Membranen bei niedrigem Energiebedarf realisiert werden.

Ausgehend von der bekannten Filtereinrichtung wird nach der Erfindung vorgeschlagen, dass ein Gehäuse die Membranen seitlich umgibt und oben direkt an die Begasungseinrichtung anschließt. Die erfindungsgemäße Filtereinrichtung erlaubt die Ausführung eines erfindungsgemäßen Verfahrens und zeichnet sich gleichermaßen durch dessen oben beschriebene Vorteile aus.

Vorzugsweise weist in einer erfindungsgemäßen Filtereinrichtung die Begasungseinrichtung einen Kompensationseinlass unterhalb des Gashebereinlasses auf, der bis zum Einlassquerschnitt durchströmbar ist. Weiter vorzugsweise liegt der Kompensationseinlass auf Höhe des Einlassquerschnittes oder darüber. Der Kompensationseinlass liegt somit unterhalb der oberen Wandung und oberhalb bzw. auf gleicher Höhe des Einlassquerschnittes. Damit befindet sich der Kompensationseinlass bei mit Gas gefülltem Gas-Sammelraum in Gas-Kommunikation und bei entleertem Gas-Sammelraum in Flüssigkeitskommunikation. Die hat die oben beschriebenen Vorteile für den Start- und Stopp-Vorgang des Geysir-Prozesses der pulsierenden Entleerung und wieder Befüllung des Gas-Sammelraumes.

In einer einfachen Ausgestaltung der erfindungsgemäßen Filtereinrichtung mündet der Kompensationseinlass in den Gasheberkanal. Da die Flüssigkeit in diesem Fall unmittelbar in den hohen abwärtsströmenden Gas-Volumenstrom in dem Gasheberkanal eingeleitet wird, ist der Mitreißeffekt durch das Gas vergleichsweise hoch, wodurch die Steigerung der Gas-Volumenstrom-Zufuhr begrenzt ist. Diesem Effekt kann dadurch entgegengewirkt werden, dass der Kompensationseinlass vergrößert wird, was jedoch zu einer Einschränkung der Gas-Volumenstrom-Zufuhr nach unten führt, da dann ggf. das Gasvolumen oberhalb des Kompensationseinlasses nicht leergesaugt wird.

In einer weiteren Ausgestaltung der erfindungsgemäßen Filtereinrichtung schließt sich an den Kompensationseinlass in Richtung des Umlenkungsbereiches ein Kompensationskanal an. Durch diesen werden die Position des Kompensationseinlasses und die Stelle der Einleitung des Flüssigkeitssperrstromes in den ausströmenden Gasstrom entkoppelt, was zu einer Erweiterung der Variation der Gas-Volumenstrom-Zufuhr führt.

In einer vorteilhaften Ausgestaltung einer solchen Filtereinrichtung mündet der Kompensationskanal parallel zum Gasheberkanal in den Umlenkungsbereich. Dadurch wird die Stelle des Einleitens des Sperrflüssigkeitsstromes weitest möglich nach unten verlegt. Dies hat den Vorteil, dass die Flüssigkeit separat von dem Gasvolumenstrom genau an der Stelle zugeführt wird, an der sie die Sperrwirkung für das Gas erzeugen soll, was einen Stopp des Gas-Ausströmens auch bei höherer Gasvolumenstrom-Zufuhr gewährleistet.

Noch weiter gesteigert werden kann die Gas-Volumenstrom-Zufuhr bei gleichzeitig sicherer Aufrechterhaltung der Pulsation durch eine alternative Ausgestaltung der erfindungsgemäßen Filtereinrichtung dadurch, dass bei paralleler Anbindung des Kompensationskanals zum Gasheberkanal an den Umlenkungsbereich ein Querschnitt des Kompensationseinlasses größer ist als ein minimaler Querschnitt des Kompensationskanals. Dadurch wird der Sperrstrom der Flüssigkeit erhöht und es kommt auch bei höherer Gasvolumenstrom-Zufuhr zu einem schnelleren und damit sichereren Verschließen des Einlassquerschnittes für das Gas.

Der Membranfilter kann dabei mit verschiedenen Arten von Membranen bestückt sein, wie z. B. Hohlfasermembranen, Plattenmembranen, Kissenmembranen oder zu Vorhängen verbundenen Hohlfasermembranen. Die Membranen gehören bevorzugt zu dem Bereich der Ultra- oder Mikrofiltrationsmembranen mit Porengrößen zwischen 0,02 und 1µm. Es können jedoch auch andere Membranen aus dem Bereich der Nanofiltration oder Niederdruck-Umkehrosmose eingesetzt werden.

Da während der Spülung der Membranen mit dem Gas gleichzeitig auch das Flüssigkeitsvolumen innerhalb des Membranfilters ausgetauscht werden muss, um ein Aufkonzentrieren der von den Membranen zurückgehaltenen Stoffe im Membranfilter zu verhindern, weist die Begasungseinrichtung einen Flüssigkeits-Strömungskanal auf, der den Gassammelraum vertikal durchdringt, zum Einlassen von Flüssigkeit unten in den Membranfilter.

In einer vorteilhaften Ausgestaltung der erfindungsgemäßen Filtereinrichtung ist das Gehäuse des Membranfilters als Rohr ausgestaltet. Ein solches Rohr kann einen runden, rechteckigen oder beliebig gestalteten Querschnitt aufweisen. Vorteil des Rohres ist dessen preiswerte Fertigung beispielsweise über Extrusionsverfahren.

Um die aus der Begasungseinrichtung in den Membranfilter eingetragene Luft optimal in diesem zu verteilen, weist eine Ausgestaltung der erfindungsgemäßen Filtereinrichtung einen Gasverteiler unterhalb der Membranen auf, in den der Ausströmkanal mündet.

Es gehört zum Umfang der erfindungsgemäßen Filtereinrichtung, dass die Strömungskanäle teilweise oder komplett durch Wandungen eines Gehäuses der Begasungseinrichtung gebildet werden. Zu diesen Strömungskanälen zählen der Ausströmkanal, der Gasheberkanal, Kompensationskanal sowie auch der Umlenkungsbereich.

### Ausführungsbeispiele

Die Erfindung wird nachfolgend anhand von Ausführungsbeispielen erläutert. Es zeigen
- Fig. 1a bis i: Prozess-Schritte eines erfindungsgemäßen Verfahrens in einer Prinzipskizze der Begasungseinrichtung einer erfindungsgemäßen Filtereinrichtung dargestellt als Schnittbilder und
- Fig. 2: eine erfindungsgemäße Filtereinrichtung.

Die in den Figuren dargestellten Zeichnungen sind nicht maßstäblich. Alle nicht angegebenen Details der im Folgenden beschriebenen erfindungsgemäßen Verfahren oder Filtereinrichtungen sind identisch mit den Ausführungen bereits zuvor beschriebener erfindungsgemäßer Filtereinrichtungen.

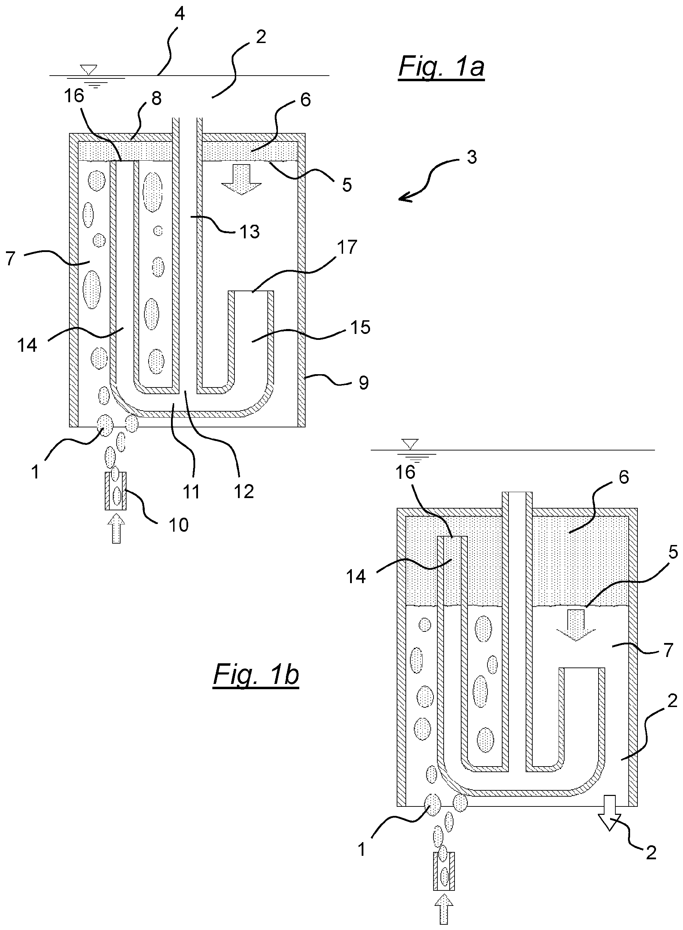

Die Figur 1a zeigt Prozess-Schritte eines erfindungsgemäßen Verfahrens zum Einleiten eines Gases 1 in eine Flüssigkeit 2 mit Hilfe einer als Prinzipskizze dargestellten Begasungseinrichtung 3 als Schnittbilder.

Die Begasungseinrichtung 3 beinhaltet ein unterhalb einer Oberfläche 4 der Flüssigkeit 2 angeordnetes und nach unten durch einen Pegel 5 der Flüssigkeit 2 begrenztes Gasvolumen 6. Dieses befindet sich in einem Gas-Sammelraum 7, der durch eine obere Wandung 8 und seitliche Wandung 9 begrenzt wird. Über einen unterhalb des Gas-Sammelraums 7 installierten und von diesem separierten Gaseinlass 10 wird das Gas 1 in den Gas-Sammelraum 7 eingeleitet und füllt dabei das Gasvolumen 6 auf, wodurch der Pegel 5 der Flüssigkeit 2 absinkt. Dabei wird die zu diesem Zeitpunkt in dem Gas-Sammelraum 7 befindliche Flüssigkeit 2 sukzessive durch das einströmende Gas 1 nach unten verdrängt und durch das Gas 1 ersetzt.

Die Begasungseinrichtung 3 weist zudem einen Umlenkungsbereich 11 auf, der oben einen Einlassquerschnitt 12 aufweist, an den sich oben ein Gas-Ausströmkanal 13 anschließt. In den Umlenkungsbereich 11 münden ein Gasheberkanal 14 und ein Kompensationskanal 15. Der Gasheberkanal 14 hat oben im Gas-Sammelraum 7 einen offenen Gashebereinlass 16 und der Kompensationskanal 15 hat oben, unterhalb der oberen Wandung 8 im Gas-Sammelraum 7 einen Kompensationseinlass 17, wobei der Querschnitt des Kompensationseinlasses 17 größer dimensioniert ist als der minimale Querschnitt des Kompensationskanals 15. Zudem durchdringt der Gas-Ausströmkanal 13 die obere Wandung 8.

Figur 1b bis 1d zeigen die weitere Befüllung des Gas-Sammelraums 7 mit Gas 1 und dadurch eine weitere Auffüllung des Gasvolumens 6 und ein weiteres Absinken des Pegels 5 der Flüssigkeit 2. Wie Fig. 1b zeigt, gelangt bei der Auffüllung des Gasvolumens 6 auch Gas 1 von oben durch den Gashebereinlass 16 in den Gasheberkanal 14, wodurch sich auch dieser von oben nach unten mit Gas 1 auffüllt.

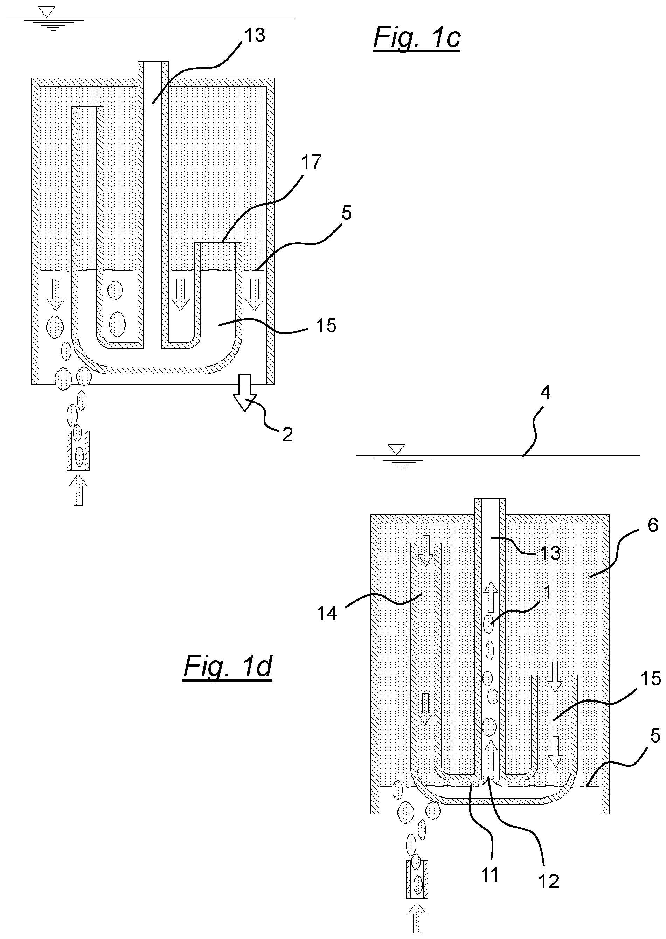

In Figur 1c hat der Pegel 5 den Kompensationseinlass 17 unterschritten und nun gelangt auch Gas 1 von oben in den Kompensationskanal 15. Während der in den Figuren 1a bis 1c dargestellten Verfahrens-Schritte bleibt der Gas-Ausströmkanal 13 mit Flüssigkeit 2 geflutet, d.h. es strömt kein Gas 1 aus der Begasungseinrichtung 3.

In Figur 1d hat der Pegel 5 der Flüssigkeit 2 den Einlassquerschnitt 12 unterschritten. Ab diesem Moment strömt das Gas 1 aus dem Gasvolumen 6 durch den Gasheberkanal 14 und den Kompensationskanal 15 nach unten zu dem Umlenkungsbereich 11 und dann in Folge nach oben durch den Einlassquerschnitt 12 und den sich an diesen anschließenden Gas-Ausströmkanal 13 zu der Oberfläche 4.

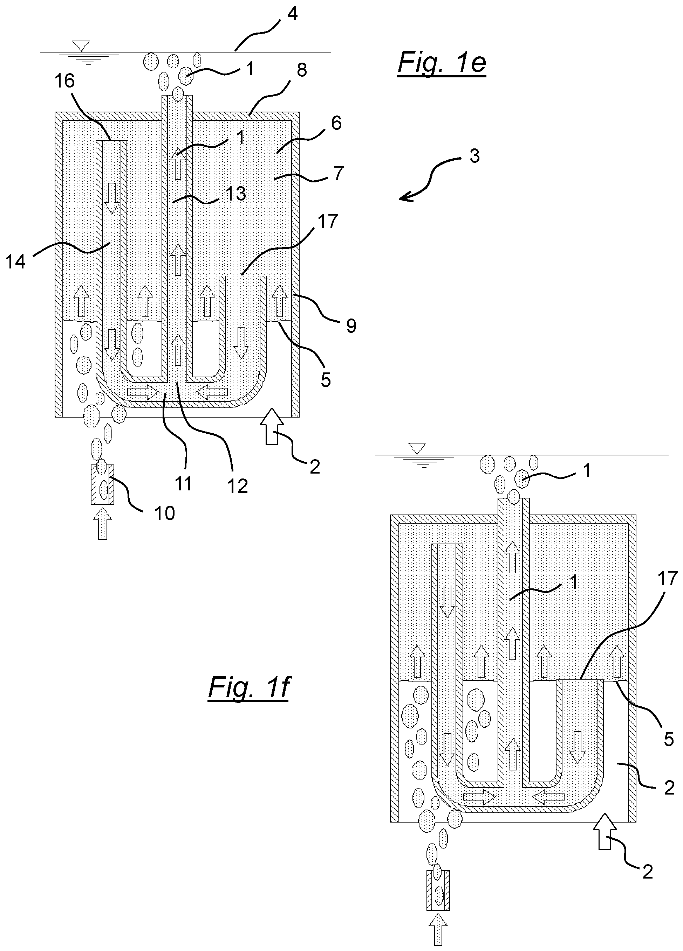

Figur 1e zeigt, wie sich durch das ausströmende Gas 1 das Gasvolumen 6 im Gas-Sammelraum 7 reduziert. Dabei wird das aus dem Gas-Sammelraum 7 ausströmende Gas 1 sukzessive durch von unten nachströmende Flüssigkeit 2 ersetzt, wodurch der Pegel 5 der Flüssigkeit 2 wieder ansteigt.

Das durch den Gas-Ausströmkanal 13 ausströmende Gas 1 erzeugt in dem Gas-Ausströmkanal 13, sowie in dem sich an diesen anschließenden Gasheberkanal 14 und in dem Kompensationskanal 15 eine Sogwirkung. Da sich zu diesem Zeitpunkt sowohl der Gashebereinlass 16 als auch der Kompensationseinlass 17 im mit Gas 1 gefüllten Gasvolumen 6 innerhalb des Gas-Sammelraums 7 befinden, strömt initiiert durch die erzeugte Sogwirkung zunächst allein das Gas 1 durch den Gas-Ausströmkanal 13.

Figur 1f zeigt den Moment, in dem der Pegel 5 der Flüssigkeit 2 den Kompensationseinlass 17 erreicht. Bis zu diesem Zeitpunkt ist nur Gas 1 durch den Gas-Ausströmkanal 13 geströmt.

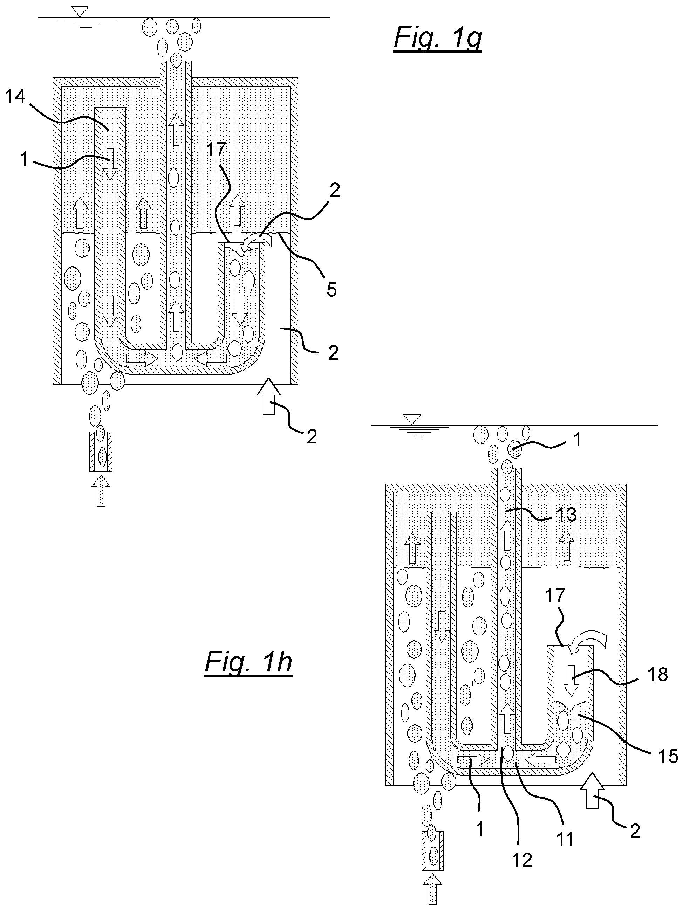

Figur 1g zeigt, wie beim weiteren Anstieg des Pegels 5 aufgrund des weiterhin durch den Gasheberkanal 14 ausströmenden Gases der Kompensationseinlass 17 mit Flüssigkeit 2 geflutet wird.

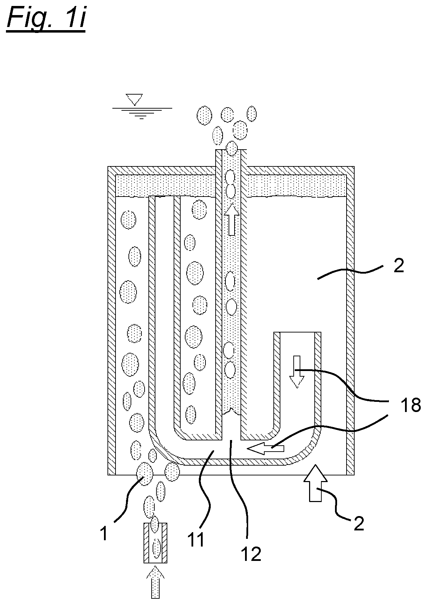

Figur 1h zeigt, wie durch den Saugeffekt des aus dem Gas-Ausströmkanals 13 ausströmenden Gases 1 ein Sperrstrom 18 der Flüssigkeit 2 durch den Kompensationseinlass 17 angesaugt wird und durch den Kompensationskanal 15 zu dem Einlassquerschnitt 12 strömt und dort von dem ausströmenden Gas 1 mitgerissen wird bis in Figur 1i der Sperrstrom 18 der Flüssigkeit 2 den Umlenkungsbereich 11 füllt und den Einlassquerschnitt 12 für das Gas 1 wie ein Ventil verschließt.

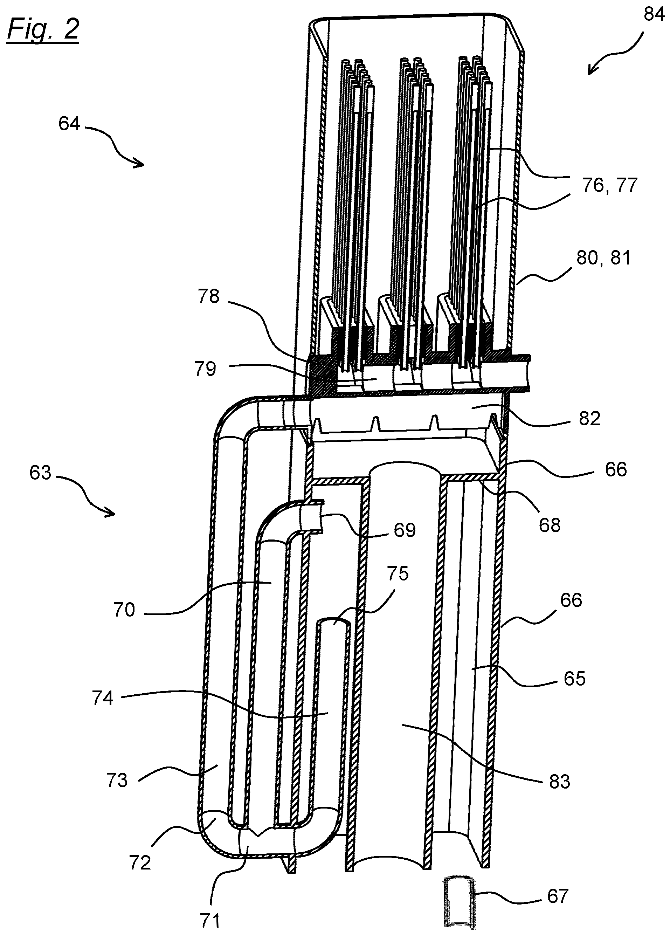

Figur 2 zeigt einen Schnitt durch eine Begasungseinrichtung 63, die unterhalb eines Membranfilters 64 montiert ist. Die Begasungseinrichtung 63 hat einen Gas-Sammelraum 65, der durch eine seitliche Wandung 66 in Form eines Rechteckrohres mit 20 cm Seitenbreite seitlich begrenzt wird. Der Gas-Sammelraum 65 ist nach unten offen mit einem darunter befindlichen Gaseinlass 67 zur Befüllung des Gas-Sammelraums 65 mit einem Gas im Betrieb. In den Gas-Sammelraum 65 mündet oben, unterhalb einer oberen Wandung 68 ein Gashebereinlass 69, an den sich ein Gasheberkanal 70 anschließt. Der Gasheberkanal 70 mündet unten in einen Umlenkungsbereich 71, an den sich oben ein Einlassquerschnitt 72 anschließt. Der Umlenkungsbereich 71 durchdringt unten die seitliche Wandung 66. An den Einlassquerschnitt 72 ist oben ein Gas-Ausströmkanal 73 angeschlossen. Zudem weist die Begasungseinrichtung 63 einen Kompensationskanal 74 auf, der innerhalb der seitlichen Wandung 66 liegt. Der Kompensationskanal 74 weist oben im Gas-Sammelraum 65 einen Kompensationseinlass 75 auf und mündet unten in den Umlenkungsbereich 71.

Der Membranfilter 64 weist Membranen 76 in Form von Hohlfasermembranen 77 auf, die unten in einem Fußelement 78 eingegossen sind. Das Fußelement 78 weist einen Permeat-Sammelraum 79 auf, an den die Hohlfasermembranen 77 lumenseitig offen angeschlossen sind zum Abzug eines Filtrates aus dem Lumen der Hohlfasermembranen 77. Die Hohlfasermembranen 77 sind oben einzeln verschlossen und werden von einem Gehäuse 80 seitlich umgeben, das als rechteckiges Rohr 81 mit gleichen Querschnittsabmessungen wie die seitliche Wandung 66 gestaltet ist und oben an die seitliche Wandung 66 anschließt. Unterhalb des Fußelementes 78 weist der Membranfilter 64 einen Gasverteiler 82 auf, in den der Gas-Ausströmkanal 73 mündet. Die Begasungseinrichtung 63 weist darüber hinaus einen Flüssigkeits-Strömungskanal 83 auf, der den Gassammelraum 65 und die obere Wandung 68 vertikal durchdringt, zum Einlassen einer Flüssigkeit unten in den Membranfilter 63.

Die Kombination aus Begasungseinrichtung 63 und Membranfilter 64 bildet gemeinsam eine erfindungsgemäße Filtereinrichtung 84.

In den Figuren sind
- 1: Gas
- 2: Flüssigkeit
- 3: Begasungseinrichtung
- 4: Oberfläche
- 5: Pegel
- 6: Gasvolumen
- 7: Gas-Sammelraum
- 8: obere Wandung
- 9: seitliche Wandung
- 10: Gaseinlass
- 11: Umlenkungsbereich
- 12: Einlassquerschnitt
- 13: Gas-Ausströmkanal
- 14: Gasheberkanal
- 15: Kompensationskanal
- 16: Gashebereinlass
- 17: Kompensationseinlass
- 18: Sperrstrom
- 63: Begasungseinrichtung
- 64: Membranfilter
- 65: Gas-Sammelraum
- 66: seitliche Wandung
- 67: Gaseinlass
- 68: obere Wandung
- 69: Gashebereinlass
- 70: Gasheberkanal
- 71: Umlenkungsbereich
- 72: Einlassquerschnitt
- 73: Gas-Ausströmkanal
- 74: Kompensationskanal
- 75: Kompensationseinlass
- 76: Membranen
- 77: Hohlfasermembranen
- 78: Fußelement
- 79: Permeat-Sammelraum
- 80: Gehäuse
- 81: Rohr
- 82: Gasverteiler
- 83: Flüssigkeits-Strömungskanal
- 84: Filtereinrichtung

## Patentansprüche

1. Verfahren zur Filtration einer Flüssigkeit (2) in einem in die Flüssigkeit (2) getauchten Membranfilter (64) mit Membranen (76) und einem Gehäuse (80), das die Membranen (76) seitlich umgibt, wobei zum Reinigen der Membranen (76) mittels einer Begasungseinrichtung (63) Gas (1) in aufeinanderfolgenden Pulsen unten in den Membranfilter (64) eingeleitet wird, und wobei die Begasungseinrichtung (63) einen Flüssigkeits-Strömungskanal (83) aufweist zum Einlassen der Flüssigkeit (2) unten in den Membranfilter (64), indem jeweils
• zunächst in einem Gassammelraum (7, 65), den der Flüssigkeits-Strömungskanal (83) vertikal durchdringt, ein unterhalb einer Oberfläche (4) der Flüssigkeit (2) angeordnetes und nach unten durch einen Pegel (5) der Flüssigkeit (2) begrenztes Gasvolumen (6) mit dem Gas (1) aufgefüllt wird, wobei das Gas (1) zugleich die Flüssigkeit (2) von oben nach unten aus einem Gasheberkanal (14, 70) verdrängt, bis der Pegel (5) einen Einlassquerschnitt (12, 72) eines Gas-Ausströmkanals (13, 73) unterschreitet,
• dann das Gas (1) aus dem Gasvolumen (6) in Folge nach unten durch den Gasheberkanal (14, 70), einen sich an diesen unten anschließenden Umlenkungsbereich (11, 71), nach oben durch den Einlassquerschnitt (12, 72) und den sich an diesen oben anschließenden Gas-Ausströmkanal (13, 73) zu der Oberfläche (4) strömt,
***dadurch gekennzeichnet, dass*** das Gehäuse (80) oben an die Begasungseinrichtung (63) anschließt.

2. Verfahren nach dem vorgenannten Anspruch, ***dadurch gekennzeichnet, dass*** ein Sperrstrom (18) der Flüssigkeit durch einen Kompensationseinlass (17, 75) unterhalb eines Gashebereinlasses (16, 69) zu dem Einlassquerschnitt (12, 72) strömt und von dem Gas (1) solange mitgerissen wird, bis die Flüssigkeit (2) den Umlenkungsbereich (11, 71) füllt und dadurch den Einlassquerschnitt (12, 72) für das Gas (1) verschließt,

3. Verfahren nach dem vorgenannten Anspruch, ***dadurch gekennzeichnet, dass***
• nachdem der Pegel (5) den Einlassquerschnitt (12, 72) unterschritten hat, zunächst allein das Gas (1) durch den Gas-Ausströmkanal (13, 73) strömt, bis der Pegel (5) den Kompensationseinlass (17, 75) übersteigt, und
• erst dann der Sperrstrom (18) durch den Kompensationseinlass (17, 75) zu dem Einlassquerschnitt (12, 72) strömt.

4. Filtereinrichtung (84), die einen Membranfilter (64) zur Filtration einer Flüssigkeit (2) mit Membranen (76), ein Gehäuse (80), das die Membranen (76) seitlich umgibt und eine unterhalb der Membranen (76) angeordnete Begasungseinrichtung (3,63) mit einem Flüssigkeits-Strömungskanal (83) aufweist zum Einlassen der Flüssigkeit (2) unten in den Membranfilter (64), mit
• einem nach unten offenen Gas-Sammelraum (7, 65), der durch eine obere Wandung (8, 68) und eine seitliche Wandung (9, 66) begrenzt wird, und den der Flüssigkeit-Strömungskanal (83) vertikal durchdringt,
• einem Gaseinlass (10, 67) zum Einlassen eines Gases (1) in den Gas-Sammelraum (7, 65),
• einem Gasheberkanal (70) zum Leerhebern des Gas-Sammelraumes (65), der oben einen Gashebereinlass (16, 69) im Gas-Sammelraum (7, 65) aufweist,
• einem Umlenkungsbereich (11, 71) unten an dem Gasheberkanal (14, 70), und
• einem Einlassquerschnitt (12, 72) oben an dem Umlenkungsbereich (11, 71), an den oben ein Gas-Ausströmkanal (13, 73) anschließt und
***dadurch gekennzeichnet dass*** das Gehäuse (80) oben an die Begasungseinrichtung (63) anschließt.

5. Filtereinrichtung (84) nach dem vorgenannten Anspruch, ***gekennzeichnet durch*** einen Kompensationseinlass (17, 75) unterhalb des Gashebereinlasses (16, 69), der bis zum Einlassquerschnitt (12, 72) durchströmbar ist

6. Filtereinrichtung (84) nach dem vorgenannten Anspruch, ***dadurch gekennzeichnet, dass*** der Kompensationseinlass (17, 75) auf Höhe des Einlassquerschnittes (12, 72) oder darüber liegt.

7. Filtereinrichtung (84) nach einem der Ansprüche 5 und 6, ***dadurch gekennzeichnet, dass*** der Kompensationseinlass (17, 75) an dem Gasheberkanal (14, 70) ausgebildet ist.

8. Filtereinrichtung (84) nach einem der Ansprüche 5 bis 7, ***gekennzeichnet durch*** einen Kompensationskanal (15, 74), der sich an den Kompensationseinlass (17, 75) in Richtung Umlenkungsbereich (11, 71) anschließt.

9. Filtereinrichtung (84) nach dem vorgenannten Anspruch, ***dadurch gekennzeichnet, dass*** der Kompensationskanal (15, 74) in den Gasheberkanal (14, 70) mündet.

10. Filtereinrichtung (84) nach einem der Ansprüche 8 und 9, ***dadurch gekennzeichnet, dass*** der Kompensationskanal (15, 74) parallel zum Gasheberkanal (14, 70) in den Umlenkungsbereich (11, 71) mündet.

11. Filtereinrichtung (84) nach einem der Ansprüche 8 bis 10, ***dadurch gekennzeichnet, dass*** ein Querschnitt des Kompensationseinlasses (17, 75) größer ist als ein minimaler Querschnitt des Kompensationskanals (15, 74).

12. Filtereinrichtung (84) nach einem der Ansprüche 4 bis 12, ***dadurch gekennzeichnet, dass*** das Gehäuse (80) ein durchgehendes Rohr (81) ist.

13. Filtereinrichtung (84) nach einem der Ansprüche 4 bis 12, ***gekennzeichnet durch*** einen Gasverteiler (82) unterhalb der Membranen (76), in den der Gas-Ausströmkanal (13, 73) mündet.

## Claims

1. A method the filtering a liquid (2) in a membrane filter (64) immersed in the liquid (2) and including membranes (76), the method comprising:
introducing a gas (1) through a gas introduction device (63) into a base of the membrane filter (64) in successive pulses so that the membranes (76) are cleaned wherein the gas introduction device (3, 63) includes a liquid flow channel (83) admits the liquid (2) into a bottom of membrane filter (64); and initially
inside a gas collection space (7, 65) that the liquid flow channel (83) penetrates vertically, filling a gas volume (6) arranged below a surface (4) of the liquid (2) and defined in a downward direction by a level (5) of the liquid (2) with the gas (1) wherein the gas (1) simultaneously displaces the liquid (2) from a top down from a gas lifting channel (14, 70) until the level (5) drops below an inlet cross section (12, 72) of a gas flow out channel (13, 73); and subsequently
flowing the gas (1) out of the gas volume (6) downward through the gas lifting channel (14, 70), a deflection portion (11, 71) adjoining at a bottom of the gas lifting channel, in upward direction through the inlet cross section (12, 72) and through the gas flow out channel (13, 73) adjoining the inlet cross section (12, 72) at a top and flowing the gas to the surface (4),
**characterized in that** a housing (80) laterally develops the membrane (76) and adjoins the gas introduction device (63) on top.

2. The method according to the preceding claim, **characterized in that** a blocking flow (18) of the liquid runs through a compensation inlet (17, 75) below a gas lifting inlet (16, 69) to the inlet cross section (12, 72) and is pulled along by the gas (1) until the liquid (2) fills the deflection portion (11, 71) and thus closes the inlet cross section (12, 72) for the gas (1).

3. The method according to the preceding claim, **characterized in that**
after the level (5) has dropped below the inlet cross section (12, 72) initially only the gas (1) flows through the gas outflow channel (13, 73) until the level (5) rises above the compensation inlet (17, 75), and
only then does the blocking flow (18) run through the compensation inlet (17, 75) to the inlet cross section (12, 72).

4. A filter device (84), comprising:
a membrane filter (64) for filtering a liquid (2), the membrane filter including membranes (76) and a gas introduction device (3, 63) arranged below the membranes (76), the gas introduction device including
a liquid flow channel (83) which admits the liquid (2) into a bottom of membrane filter (64);
a gas collection cavity (7, 65) which is open at a base and defined by an upper wall (8, 68) and a lateral wall (9, 66), and which the liquid flow channel (83) penetrates vertically,
a gas inlet (10, 67) configured to flow a gas (1) into the gas collection cavity (7, 65),
a gas lifting channel (70) configured to siphon a gas out of the gas collection chamber (65) and empty the gas collection chamber, the gas lifting channel including a gas lifting inlet (16, 69) at a top in the gas collection cavity (7, 65),
a deflection portion (11, 71) arranged at a bottom of the gas lifting channel (14, 70), and
an inlet cross section (12, 72) arranged at a top of the deflection portion (11, 71) wherein a gas outflow channel (13, 73) is connected at a top of the inlet cross section (12, 72),
**characterized by** a housing (80) which laterally surrounds the membranes (76) and which is connected to the gas introduction device (63) at a top of the gas introduction device.

5. The filter device (84) according to the preceding claim, **characterized in that** a compensation inlet (17, 75) is arranged below the gas lifting inlet (16, 69) and flowable towards the inlet cross section (12, 72).

6. The filter device (84) according to the preceding claim, **characterized in that** the compensation inlet (17, 75) is arranged at a level of the inlet cross section (12, 72) or above.

7. The filter device (84) according to one of Claims 5 and 6, **characterized in that** the compensation inlet (17, 75) is formed on the gas lifting channel (14, 70).

8. The filter device (84) according to one of Claims 5 to 7, **characterized by** a compensation channel (15, 74) which connects to the compensation inlet (17, 75) in a direction towards the deflection area (11, 71).

9. The filter device (84) according to the preceding claim, **characterized in that** the compensation channel (15, 74) leads into the gas lifting channel (14, 70).

10. The filter device (84) according to one of claims 8 and 9, **characterized in that** the compensation channel (15, 74) leads parallel to the gas lift channel (14, 70) into the deflection area (11, 71).

11. The filter device (84) according to one of claims 8 to 10, **characterized in that** a cross section of the compensation inlet (17, 75) is larger than a minimum cross section of the compensation channel (15, 7 4).

12. The filter device (84) according to one of claims 4 to 11, **characterized in that** the housing (80) is a continuous tube (81).

13. The filter device (84) according to one of claims 4 to 12, **characterized by** a gas distributor (82) below the membranes (76) wherein the gas outlet channel (13, 73) leads into the gas distributor.

## Revendications

1. Procédé, destiné à filtrer un liquide (2) dans un filtre à membranes (64) immergé dans le liquide (2), pourvu de membranes (76) et d'un carter (80), qui entoure latéralement les membranes (76), pour le nettoyage des membranes (76) au moyen d'un dispositif de gazage (63), du gaz (1) étant introduit par impulsions successives en bas dans le filtre à membranes (64) et le dispositif de gazage (63) comportant un canal de circulation (83) du liquide, destiné à faire entrer le liquide (2) en bas dans le filtre à membranes (64), en ce que respectivement
• d'abord dans un espace collecteur (7, 65) de gaz, qui traverse à la verticale le canal de circulation (83) du liquide, l'on charge avec le gaz (1) un volume de gaz (6) placé en-dessous d'une surface (4) du liquide (2) et délimité vers le bas par un niveau (5) du liquide (2), le gaz (1) refoulant en même temps le liquide (2) du haut vers le bas à partir d'un canal d'ascendance (14, 70) du gaz, jusqu'à ce que le niveau (5) soit inférieur à une section transversale d'entrée (12, 72) d'un canal de décharge (13, 73) du gaz,
• le gaz (1) circule ensuite hors du volume de gaz (6), par la suite vers le bas, à travers le canal d'ascendance (14, 70) du gaz, une zone de renvoi (11, 71) se raccordant sur le bas sur celui-ci, vers le haut, à travers la section transversale d'entrée (12, 72) et le canal de décharge (13, 73) du gaz se raccordant en haut sur celui-ci vers la surface (4),
**caractérisé en ce que** le carter (80) se raccorde sur la haut sur le dispositif de gazage (63).

2. Procédé selon la revendication précédemment citée, **caractérisé en ce qu'**un courant de blocage (18) du liquide circule à travers une entrée de compensation (17, 75), en-dessous d'une entrée d'ascendance (16, 69) du gaz, vers la section transversale d'entrée (12, 72) et est entraîné par le gaz (1) jusqu'à ce que le liquide (2) remplisse la zone de renvoi (11, 71) et ferme de ce fait la section transversale d'entrée (12, 72) pour le gaz (1).

3. Procédé selon la revendication précédemment citée, **caractérisé en ce que**
• dès que le niveau (5) est inférieur à la section transversale d'entrée (12, 72), d'abord seul le gaz (1) circule à travers le canal de décharge (13, 73) du gaz, jusqu'à ce que le niveau (5) dépasse l'entrée de compensation (17, 75) et
• à cet instant seulement, le courant de blocage (18) circule à travers l'entrée de compensation (17, 75) vers la section transversale d'entrée (12, 72).

4. Dispositif de filtration (84), qui comporte un filtre à membranes (64), destiné à filtrer un liquide (2), pourvu de membranes (76), d'un carter (80), qui entoure latéralement les membranes (76) et d'un dispositif de gazage (3, 63), placé en-dessous des membranes (76), pourvu d'un canal de circulation (83) du liquide, destiné à faire entrer le liquide (2) par le bas dans le filtre à membranes (64), comprenant
• un espace collecteur (7, 65) de gaz ouvert en bas, qui est délimité par une paroi (8, 68) supérieure et par une paroi (9, 66) latérale et qui traverse à la verticale le canal de circulation (83) du liquide,
• une entrée de gaz (10, 67), destinée à faire entrer un gaz (1) dans l'espace collecteur (7, 65) de gaz,
• un canal d'ascendance (70) du gaz, destiné à vider par ascendance l'espace collecteur (65) de gaz, qui comporte sur le haut une entrée d'ascendance (16, 69) du gaz dans l'espace collecteur (7, 65) de gaz,
• une zone de renvoi (11, 71), sur le bas sur le canal d'ascendance (14, 70) du gaz, et
• une section transversale d'entrée (12, 72), sur le haut sur la zone de renvoi (11, 71), sur laquelle se raccorde sur le haut un canal de décharge (13, 73) du gaz et
**caractérisé en ce que** le carter (80) se raccorde en haut sur le dispositif de gazage (63).

5. Dispositif de filtration (84) selon la revendication précédemment citée, **caractérisé par** une entrée de compensation (17, 75) en dessous de l'entrée d'ascendance (16, 69) du gaz, qui est susceptible d'être irriguée jusqu'à la section transversale d'entrée (12, 72).

6. Dispositif de filtration (84) selon la revendication précédemment citée, **caractérisé en ce que** l'entrée de compensation (17, 75) se situe à la hauteur de la section transversale d'entrée (12, 72) ou au-dessus.

7. Dispositif de filtration (84) selon l'une quelconque des revendications 5 et 6, **caractérisé en ce que** l'entrée de compensation (17, 75) est conçue sur le canal d'ascendance (14, 70) du gaz.

8. Dispositif de filtration (84) selon l'une quelconque des revendications 5 à 7, **caractérisé par** un canal de compensation (15, 74), qui se raccorde sur l'entrée de compensation (17, 75), dans la direction de la zone de renvoi (11, 71).

9. Dispositif de filtration (84) selon la revendication précédemment citée, **caractérisé en ce que** le canal de compensation (15, 74) débouche dans le canal d'ascendance (14, 70) du gaz.

10. Dispositif de filtration (84) selon l'une quelconque des revendications 8 et 9, **caractérisé en ce que** le canal de compensation (15, 74) débouche dans la zone de renvoi (11, 71), à la parallèle du canal d'ascendance (14, 70) du gaz.

11. Dispositif de filtration (84) selon l'une quelconque des revendications 8 à 10, **caractérisé en ce qu'**une section transversale de l'entrée de compensation (17, 75) est supérieure à une section transversale minimale du canal de compensation (15, 74).

12. Dispositif de filtration (84) selon l'une quelconque des revendications 4 à 12, **caractérisé en ce que** le carter (80) est un tube (81) continu.

13. Dispositif de filtration (84) selon l'une quelconque des revendications 4 à 12, **caractérisé par** un distributeur de gaz (82) en-dessous des membranes (76), qui débouche dans le canal de décharge (13, 73) du gaz.
